# FASCICULE DE BREVET EUROPEEN

(11) **EP 0 445 599 B1**
(45) Date de publication et mention de la délivrance du brevet: **03.01.1996**
(21) Numéro de dépôt: 91102571.6
(22) Date de dépôt: 22.02.1991
(51) Int. Cl.: G01N 1/22, G01K 1/14, C21B 7/24

(54) **Sonde de prise d'échantillons gazeux et de mesures thermiques dans un four à cuve**
Sonde für Gasprobeentnahme und thermische Messungen in einem Schachtofen
Probe for taking gaseous samples and making thermal measurements in a shaft furnace

(30) Priorité: 07.03.1990 LU 87693
(43) Date de publication de la demande: 11.09.1991
(73) Titulaire: PAUL WURTH S.A., L-1122 Luxembourg (LU)
(72) Inventeur: Mailliet, Pierre, L-1423 Howald (LU); Lonardi, Emile, L-4945 Bascharage (LU); Wies, Georges, L-3462 Dudelange (LU)
(74) Mandataire: Freylinger, Ernest T.

(56) Documents cités:
- LU-A- 65 940
- US-A- 2 382 888
- US-A- 3 240 069
- US-A- 4 044 612
- US-A- 4 098 122
- US-A- 4 822 570

## Description

La présente invention concerne une sonde de prise d'échantillons gazeux et de mesures thermiques dans un four à cuve.

Une sonde de ce genre est connue par exemple du document US 31 305 84. Compte tenu des conditions de travail extrêmement sévères de ces sondes, celles-ci demandent un entretien fréquent, par exemple pour le remplacement d'un thermocouple défaillant ou le débouchage d'un tuyau de prise d'échantillons gazeux obturé. Pour effectuer ces opérations d'entretien, il était, jusqu'à présent, nécessaire de démonter complètement la sonde et d'effectuer, le plus souvent, ces travaux dans l'atelier de réparation, ce qui constitue, bien entendu, une perte de temps.

Le document LU-A-65 940 peut être considéré comme représentant l'état de la technique le plus proche. Il décrit une sonde de prise d'échantillons gazeux et de mesures thermiques dans un four à cuve qui comprend un corps monobloc en forme de gaine introduit à travers la paroi du four au-dessus de la surface de chargement. La gaine présente des sections transversales diminuant sous forme de gradins superposés depuis la paroi du four jusqu'à la pointe de la sonde. Des tuyaux d'eau de refroidissement situés à l'intérieur de la gaine aboutissent au niveau des gradins. Des tubes rectilignes traversent la gaine de l'extérieur du four pour présenter une embouchure dans le four au niveau des gradins. Ils constituent des tuyaux de canalisation de d'échantillons de gaz et sont connectés à un dispositif de réception des échantillons de gaz à l'extérieur du four. L'extrémité avant de chacun de ces tuyaux est soudée de façon étanche dans un orifice aménagé dans la gaine au niveau du gradin respectif. Dans la gaine ces tuyaux sont supportés par des traverses horizontales. A l'intérieur de chacun de ces tuyaux de canalisation d'échantillons de gaz est logé de façon rétractable un thermocouple, monté de façon classique dans une gaine de protection. En position de mesure le thermocouple est disposé au niveau de l'embouchure du tuyau de canalisation d'échantillons de gaz dans le four. L'extrémité avant du tube de protection du thermocouple est solidaire d'une tête de captage d'échantillons de gaz qui comprend le long d'une génératrice inférieure une série de trous de faible diamètre pour laisser pénétrer le gaz dans l'intérieur du tuyau de canalisation d'échantillons de gaz. Ces trous de faible diamètre ont l'avantage d'éviter que des particules solides ne pénètrent dans le tuyau de canalisation d'échantillons de gaz et ne viennent obturer ce dernier. Ils ont cependant le désavantage qu'ils se bouchent rapidement et doivent être libérés par injection d'un gaz et/ou rétraction du tube de protection avec tête de captage à travers l'embouchure du tuyau de prise d'échantillons de gaz. Il serait par conséquent intéressant de pouvoir travailler avec des trous plus importants dans la tête de captage qui se bouchent moins rapidement. Cependant, ces trous plus importants laisseraient pénétrer des particules solides dans les tuyaux de canalisation d'échantillons de gaz. Ces derniers pourraient alors se boucher complètement, et à la limite on ne pourrait plus être capable de retirer le thermocouple sans démontage de la sonde.

Un but de la présente invention est de de proposer une sonde de gaz, du genre de celle décrite dans le document LU-A-65 940, dont l'entretien est plus aisé et pour laquelle un bouchage complet des tuyaux canalisant les échantillons de gaz ne nécessite plus le démontage de la sonde.

Ce but est atteint par une sonde selon la première revendication. Il sera notamment apprécié que la nouvelle sonde permet le remplacement individuel "in-situ" des tuyaux de prise d'échantillons gazeux et des tuyaux de mesures thermiques sans démontage de la sonde. : selon l'invention, les surfaces des entretoises diminuent progressivement depuis la paroi du four jusqu'à la pointe de la sonde, et la différence de surface entre deux entretoises voisines définit une portion exposée de l'entretoise la plus grande et un gradin de rétrécissement transversal correspondant de la gaine. Des orifices se trouvent dans lesdites portions exposées des entretoises. Les tuyaux intérieurs de prise d'échantillons gazeux et de mesures thermiques sont tous des éléments individuels rectilignes et échangeables. Ils sont logés dans des canaux rectilignes de support et de protection traversant chacun la gaine depuis l'extérieur jusqu'à la portion exposée respective.

Selon un mode de réalisation préféré, lesdites portions exposées des entretoises sont de forme sensiblement triangulaire, la pointe étant tournée vers la surface de chargement, tandis que les différentes portions triangulaires successives sont disposées, l'une par rapport à l'autre, en quinconce vues en projection axiale.

Chacun des tuyaux intérieurs peut être bridé directement sur la gaine à l'extérieur du four. Les tuyaux peuvent également être maintenus en place dans leur canal de support par l'intermédiaire d'un ressort hélicoïdal à l'extérieur du four.

L'extrémité intérieure de chaque tuyau de mesure thermique comporte une pointe fermée dans laquelle est logé un thermocouple noyé dans une matière à bonne conductibilité thermique et relié à travers le tuyau au dispositif de mesure thermique à l'extérieur du four.

D'autres particularités et caractéristiques de l'invention ressortiront de la description de quelques modes de réalisation avantageux présentés ci-dessous, à titre d'illustration, en référence aux dessins annexés dans lesquels :
- la figure 1 représente schématiquement un premier mode de réalisation d'une sonde selon la présente invention ;
- la figure 2 représente schématiquement un second mode de réalisation d'une sonde selon la présente invention ;
- la figure 3 représente schématiquement une vue axiale de la sonde à partir de l'intérieur du four ;
- la figure 4 représente une coupe de l'extrémité intérieure de la sonde suivant le plan de coupe A-A sur la figure 3 ;
- la figure 5 représente schématiquement une vue en perspective d'une partie de la sonde ;
- la figure 6 montre schématiquement une coupe verticale partielle d'un premier mode de réalisation de la disposition des tuyaux de prise d'échantillons ;
- la figure 7 montre une vue analogue à celle de la figure 6 d'un second mode de réalisation des tuyaux de prise d'échantillons, et
- la figure 8 montre schématiquement l'extrémité intérieure des tuyaux de mesure thermique.

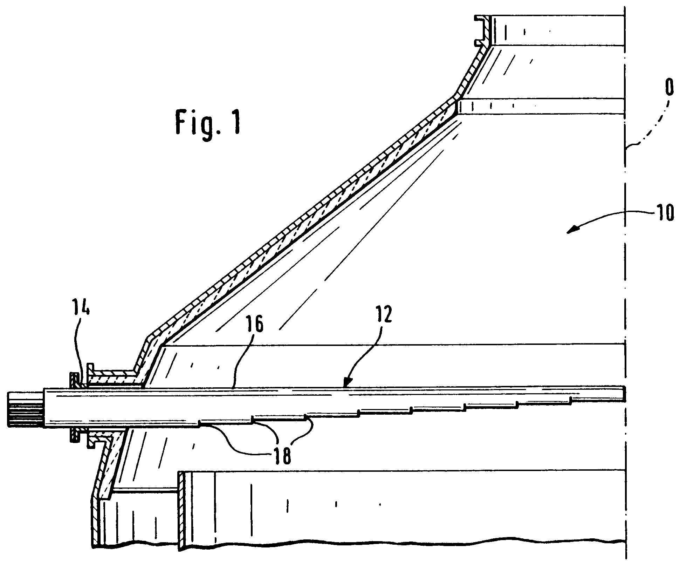

La figure 1 représente schématiquement une partie de la tête d'un four à cuve 10. La référence 12 désigne une sonde de mesures thermiques et de prise d'échantillons gazeux qui est maintenue dans un support 14 de la paroi du four et qui s'étend horizontalement au-dessus de la surface de chargement jusqu'à l'axe central du four. Cette sonde est constituée essentiellement d'une gaine extérieure 16 dans laquelle sont disposés des tuyaux de prise d'échantillons gazeux et de mesures thermiques qui, conformément à la présente invention, sont tous des éléments individuels rectilignes et échangeables qui se terminent chacun dans un des gradins 18 formés dans la gaine 16 sur toute la longueur de la sonde et conférant à celle-ci une forme effilée.

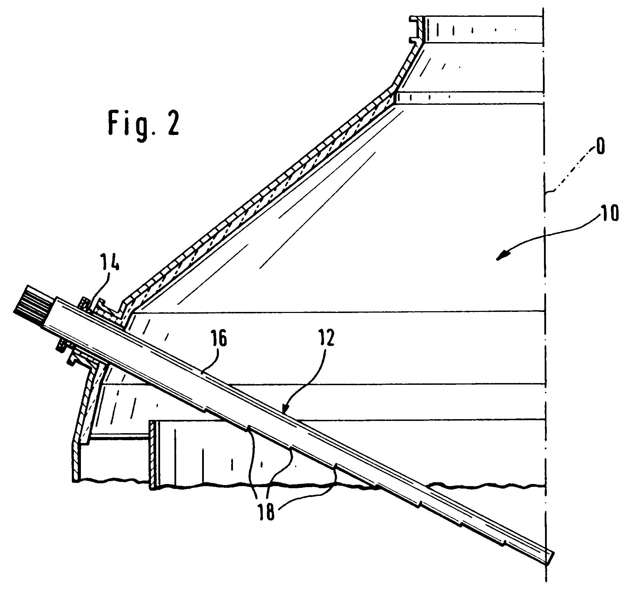

La figure 2 montre une sonde 12 dont la constitution est identique à celle de la figure 1, mais qui est inclinée par rapport à l'horizontale, la tête de la sonde 12 étant plus basse que le support 14. Cette disposition a été choisie pour que la sonde 12 soit parallèle à la surface de chargement dans les fours qui fonctionnent avec un profil de chargement en "V".

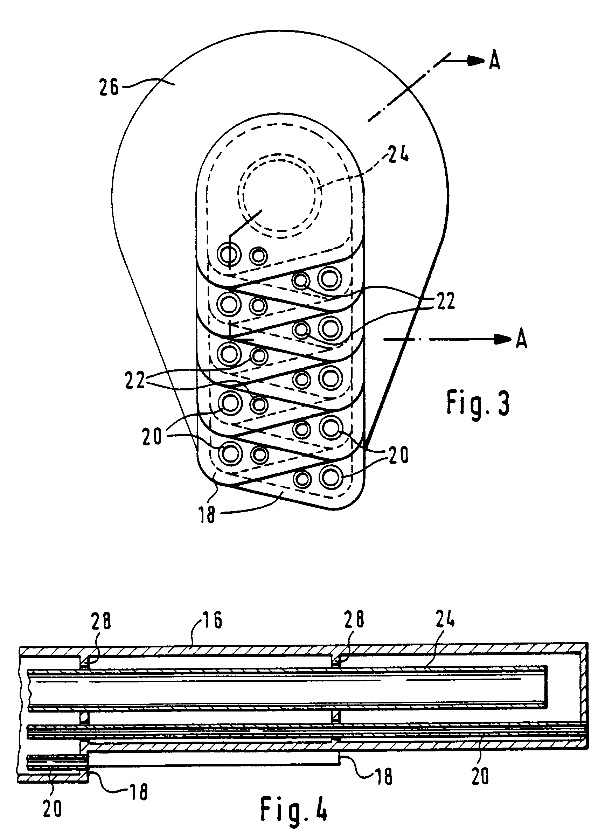

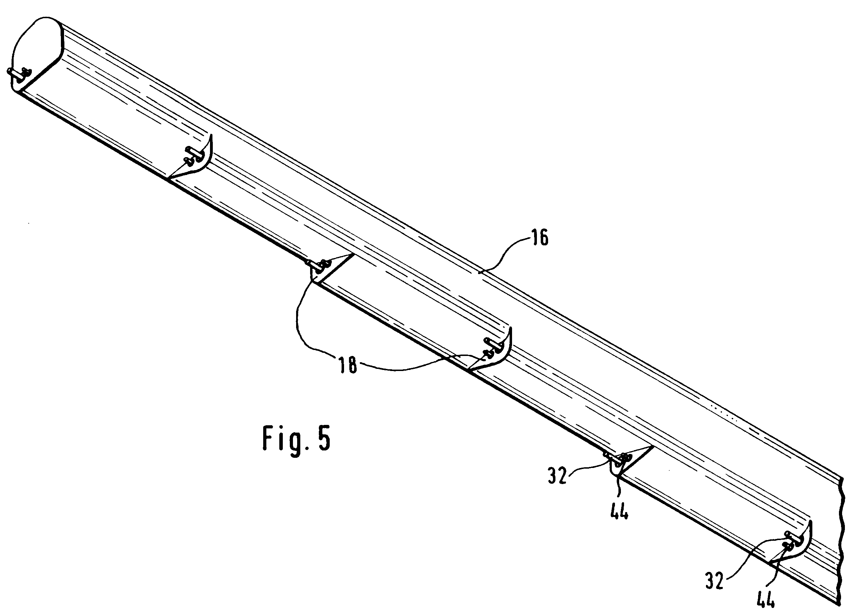

L'aspect particulier de la sonde 12 en forme de gradins ressort clairement des figures 3 et 5. Comme le représente la vue en perspective de la figure 5, la section de la sonde 12 diminue graduellement de l'extérieur vers l'intérieur par des gradins successifs 18 disposés radialement par rapport à l'axe de la sonde et dans lesquels débouchent des canaux 20, 22, prévus respectivement pour des prises d'échantillons gazeux et des mesures thermiques. Comme le montre la figure 3, les gradins 18 sont sensiblement de forme triangulaire. Ils sont prévus alternativement d'un côté et de l'autre d'un plan vertical passant par l'axe de la sonde. La référence 24 sur la figure 3 désigne un canal axial pour la circulation d'un liquide de refroidissement alors que la référence 26 désigne une enveloppe de protection que l'on prévoit normalement autour de la partie supérieure de la sonde et qui peut être constituée, par exemple, de manière connue en soi, par des caissons matière-matière.

La figure 4 montre, en coupe, l'extrémité intérieure de la sonde 12 avec l'avant-dernier et le dernier des gradins 18, ce dernier n'étant visible qu'en partie car étant disposé au-delà du plan vertical de symétrie. Cette figure montre un canal rectiligne 20 débouchant à l'extrémité de la gaine 16 et un second canal semblable 20 débouchant dans la face radiale de l'avant-dernier gradin 18, un autre canal semblable débouchant dans le dernier gradin 18 mais non visible sur la figure 4. Les canaux 20 sont supportés, à l'intérieur de la gaine 16, par des entretoises transversales 28 qui sont solidaires de la gaine 16 et qui forment, chacune, la face radiale de chacun des gradins 18. Les entretoises 28 supportent également, à l'intérieur de la gaine 16, le canal axial 24 ou éventuellement plusieurs canaux pour la circulation du liquide de refroidissement. Ce liquide de refroidissement qui peut être simplement de l'eau, remplit toute la gaine 16 et circule autour des canaux 20 par des passages non-étanches dans les entretoises 28 autour des canaux 20, 22 et 24 ou des perforations supplémentaires dans les entretoises jusque dans la pointe de la gaine 16 pour retourner à l'extérieur àtravers le canal axial 24. Les canaux 22 non visibles sur la figure 4 sont analogues aux canaux 20 et évoluent parallèlement à ceux-ci à travers la gaine 16 et les entretoises 28.

L'une des particularités de la présente invention est de permettre d'introduire dans chacun des canaux 20, 22 depuis l'extérieur de la sonde 12 les moyens de prise d'échantillons gazeux et de mesures thermiques sans devoir sortir la sonde 12 du four, et sans devoir vider le circuit de refroidissement.

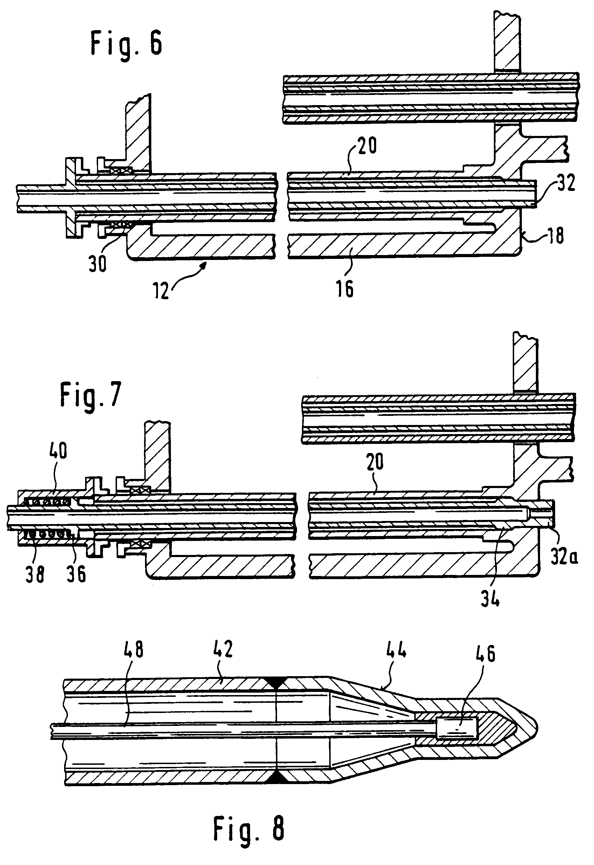

La figure 6 montre plus en détail l'un des canaux intérieurs 20 s'étendant depuis l'un des gradins 18 jusqu'à l'extérieur du four en quittant la gaine 16 par un joint d'étanchéité 30 permettant de contenir le liquide de refroidissement de façon étanche à l'intérieur de la gaine 16 ainsi que les dilatations différentielles entre la gaine 16 et le canal 20. Le canal 20 représenté sur la figure 6 contient un tuyau 32 s'étendant sur toute la longueur du canal 20 pour émerger dans la face radiale de l'un des gradins 18. Il s'agit en l'occurrence d'un tuyau de prise d'échantillons gazeux, les gaz pouvant pénétrer au niveau du gradin 18 dans le tuyau 32 et traverser celui-ci pour être captés à l'extérieur du four en vue des analyses. Dans le mode de réalisation de la figure 6, le tuyau 32 est bridé à l'extérieur de la sonde 12 sur le canal 20. L'extrémité intérieure, par contre, émerge librement du canal 20 afin de permettre des dilatations thermiques différentielles et de faciliter le démontage. En effet, en vue de ce démontage, il suffit de déboulonner le tuyau 32 à l'extérieur du four et de le dégager librement de son canal 20 sans perturber le fonctionnement du reste de la sonde. Il est également possible de le déboucher par engagement d'une tige depuis l'extérieur.

La figure 7 montre un second mode de réalisation, de mise en place et de maintien d'un tuyau 32a pour la prise d'échantillons gazeux. Ce tuyau 32a est également engagé librement à travers le canal 20 mais ce tuyau 32a comporte à son extrémité intérieure un bourrelet 34 qui coopère avec l'extrémité intérieure du canal 20 pour déterminer la position opérative du tuyau 32a. A l'extérieur de la sonde 12, le tuyau 32a comporte une bride périphérique 36 qui est sollicitée élastiquement en direction de pénétration dans le canal 20 par un ressort hélicoïdal 38 disposé autour du tuyau 32a et prenant appui au fond d'un capuchon 40 qui est boulonné sur la partie extérieure du canal 20 ou sur la gaine 16. Le tuyau 32a est donc maintenu élastiquement en place, le ressort 38 permettant la compensation des dilatations thermiques différentielles. Pour le démontage, il suffit également de déboulonner simplement le capuchon 40 et de sortir le tuyau 32a.

La figure 8 illustre un tuyau 42 pour les mesures thermiques. Ce tuyau 42 est engagé et fixé dans le canal correspondant 22 de la même manière que le tuyau 32 selon la figure 6 ou le tuyau 32a selon la figure 7. A l'extrémité intérieure de chacun des tuyaux 42 est soudée une coiffe 44 en forme de pointe fermée contenant un thermocouple 46 noyé dans une matière ayant une bonne conductibilité thermique. Chaque thermocouple 46 est relié électriquement par une tige 48 à travers son tuyau 42 au dispositif de mesure à l'extérieur du four. En position opérative les tuyaux 42 sont maintenus dans leur canal 22 de manière à ce que la coiffe 44 émerge de la paroi de la gaine 16 formant le gradin correspondant comme représenté sur la vue en perspective de la figure 5.

## Revendications

1. Sonde de prise d'échantillons gazeux et de mesures thermiques dans un four à cuve, comprenant
un support en forme de gaine (16) introduit à travers la paroi du four (10) au-dessus de la surface de chargement, la gaine présentant des sections transversales diminuant sous forme de gradins (18) depuis la paroi du four jusqu'à la pointe de la sonde;
un ou plusieurs circuits de refroidissement (24) traversant la gaine,
une série de tuyaux de prise d'échantillons de gaz (32, 32a) rectilignes qui débouchent dans le four à travers lesdits gradins (18) et qui sont connectés à un dispositif de réception des échantillons de gaz à l'extérieur du four,
des tuyaux de mesures thermiques (42) rectilignes munis chacun d'un thermocouple (46),
une première série de canaux rectilignes (22) qui traversent la gaine de l'extérieur du four pour présenter une embouchure dans le four au niveau des gradins, les tuyaux de mesures thermiques étant logés individuellement et de façon rétractable dans ces canaux rectilignes (22), de sorte qu'en position opérative le thermocouple (46) soit disposé au niveau de cette embouchure,
**caractérisée**
par une deuxième série de canaux rectilignes (20) qui traversent la gaine de l'extérieur du four pour présenter une embouchure dans le four au niveau des gradins, les tuyaux de prise d'échantillons de gaz (32, 32a) étant logés individuellement et de façon rétractable dans ces canaux rectilignes (20) de ladite deuxième série, et chacun desdits tuyaux de prise d'échantillons de gaz (32, 32a) étant agencé en position de mesure dans son canal (20) respectif de façon que son extrémité avant soit située dans l'embouchure du canal (20) dans le four pour capter des échantillons de gaz et les canaliser jusqu'au dispositif de réception des échantillons de gaz à l'extérieur du four; et
par des entretoises transversales (28) pour relier les différentes sections de la gaine (18) et pour supporter les canaux (20, 22) de la première et de la deuxième série à l'intérieur de la gaine (16), ces entretoises (28) étant agencées entre deux sections successives de la gaine (16) et dimensionnées de façon à former en même temps les gradins (18) avec les embouchures desdits canaux (20, 22).

2. Sonde selon la revendication 1, caractérisée en ce que les gradins (18) sont prévus alternativement d'un côté et de l'autre d'un plan vertical passant par l'axe longitudinal de la sonde.

3. Sonde selon la revendication 1, caractérisée en ce que les entretoises (28) ont des portions exposées de forme sensiblement triangulaire, la pointe de chaque portion triangulaire étant tournée vers la surface de chargement, et en ce que les différentes portions triangulaires successives sont disposées, l'une par rapport à l'autre, en quinconce, dans une vue en projection axiale de la sonde.

4. Sonde selon la revendication 1, caractérisée en ce que l'extrémité arrière d'un tuyau de prise d'échantillons de gaz (32) et/ou d'un tuyau de mesures thermiques (42) est bridée sur la gaine (16) à l'extérieur du four, et en ce que l'extrémité intérieure de ces tuyaux (32, 42) émerge librement du canal traversant la gaine.

5. Sonde selon la revendication 1, caractérisée en ce que l'extrémité arrière d'un tuyaux de prise d'échantillons de gaz (32a) et/ou d'un tuyau de mesures thermiques (42) est maintenue en place dans son canal de support (20), (22) par l'intermédiaire d'un ressort hélicoïdal (38) monté à l'extérieur du four.

6. Sonde selon l'une quelconque des revendications 1 à 4, caractérisée en ce que la gaine (16) forme un caisson étanche dans lequel sont logés, de façon étanche les canaux (20) et (22) et qui est branché à l'extérieur du four sur un circuit de refroidissement.

7. Sonde selon la revendication 5, caractérisée par un canal axial (24) ou plusieurs canaux de circulation du liquide de refroidissement supportés par les entretoises (28) à l'intérieur de la gaine (16).

8. Sonde selon l'une quelconque des revendications 1 à 4, caractérisée en ce que les canaux rectilignes (20, 22) traversant la gaine (16) quittent cette dernière à l'extérieur du four à travers un joint d'étanchéité.

## Claims

1. Probe for taking gas samples and making thermal measurements in a shaft furnace, comprising
a support in the form of a jacket (16) introduced through the furnace wall (10) above the charging surface, the jacket having decreasing transverse cross-sections in the form of steps (18) from the furnace wall to the tip of the probe;
one or more cooling circuits (24) passing through the jacket,
a series of straight pipes for taking gas samples (32, 32a) which open out in the furnace through the said steps (18) and which are connected to a device for receiving the gas samples outside the furnace,
straight pipes for thermal measurements (42) each fitted with a thermocouple (46),
a first series of straight channels (22) which pass through the jacket from outside the furnace so as to have an opening in the furnace at the position of the steps, the pipes for thermal measurements being individually housed in a retractable manner in these straight channels (22) so that in the operating position the thermocouple (46) is located at this opening,
characterised
by a second series of straight channels (20) which pass through the jacket from outside the furnace so as to have an opening inside the furnace at the position of the steps, the gas sampling pipes (32, 32a) being individually housed in a retractable manner in these straight channels (20) of the said second series, and each of the said gas sampling pipes (32, 32a) being arranged in a measuring position in its respective channel (20) so that its front end is located in the opening of the channel (20) in the furnace in order to collect the gas samples and to channel them to the device for receiving gas samples outside the furnace; and
by transverse cross-pieces (28) for connecting the different sections of the jacket (18) and for supporting the channels (20, 22) of the first and second series inside the jacket (16), these cross-pieces (28) being positioned between two successive sections of the jacket (16) and so dimensioned as to form, at the same time, the steps (18) with the openings of the said channels (20, 22).

2. Probe according to Claim 1, characterised in that the steps (18) are provided alternately on the two sides of a vertical plane passing through the longitudinal axis of the probe.

3. Probe according to Claim 1, characterised in that the cross-pieces (28) have exposed portions of substantially triangular shape, the tip of each triangular portion being turned towards the charging surface, and in that the different successive triangular portions are arranged with respect to each other in staggered rows, when viewed in an axial projection along the probe.

4. Probe according to Claim 1, characterised in that the rear end of a gas sampling pipe (32) and/or of a thermal measurement pipe (42) is flange-coupled to the jacket (16) outside the furnace, and in that the inner end of these pipes (32, 42) emerges freely from the channel passing through the jacket.

5. Probe according to Claim 1, characterised in that the rear end of a gas sampling pipe (32a) and/or of a thermal measurement pipe (42) is held in place in its supporting channel (20), (22) by means of a helical spring (38) mounted outside the furnace.

6. Probe according to any one of Claims 1 to 4, characterised in that the jacket (16) forms a sealed casing in which are housed in a sealed manner the channels (20) and (22) and which is connected outside the furnace to a cooling circuit.

7. Probe according to Claim 5, characterised by an axial channel (24) or several channels for the circulation of a liquid coolant supported by the cross-pieces (28) inside the jacket (16).

8. Probe according to any one of Claims 1 to 4, characterised in that the straight channels (20, 22) passing through the jacket (16) emerge from the latter to the outside of the furnace through a sealing ring.

## Patentansprüche

1. Sonde für Gasprobenentnahme und thermische Messungen in einem Schachtofen, bestehend aus
einem Aufnahmerohr in Form eines Hüllrohres (16), das durch die Ofenwand (10) oberhalb der Beschickungsoberfläche eingeleitet wird, wobei der Querschnitt des Hüllrohres stufenförmig von der Ofenwand bis zur Sondenspitze abnimmt,
einem oder mehreren durch das Hüllrohr laufenden Kühlkanälen (24),
einer Reihe von geraden Gasproben-Entnahmerohren (32, 32a), die über die besagten Stufen (18) in den Ofen münden und mit einer Aufnahmevorrichtung für die Gasproben außerhalb des Ofens verbunden sind,
geradlinige Temperaturmeßrohre (42) mit je einem Thermoelement (46),
einer ersten Serie von geradlinigen Kanälen (22), die von außerhalb des Ofens durch das Hüllrohr führen und auf Höhe der Stufen in dem Ofen eine Einmündung ausbilden, wobei die Temperaturmeßrohre einzeln und zurückziehbar in diesen geradlinigen Kanälen (22) angeordnet sind, so daß sich das Thermoelement (46) in Betriebsbereitschaft jeweils auf der Höhe dieser Einmündung befindet,
gekennzeichnet
durch eine zweite Serie von geraden Kanälen (20), die von außerhalb des Ofens durch das Hüllrohr führen um auf Höhe der Stufen in dem Ofen eine Einmündung auszubilden, wobei die Gasproben-Entnahmerohre (32, 32a) einzeln und zurückziehbar in diesen geradlinigen Kanälen (20) der zweiten Serie angeordnet sind, wobei jedes dieser Gasproben-Entnahmerohre (32, 32a) in der Meßposition so in seinem jeweiligen Kanal (20) angeordnet ist, daß sich sein vorderes Ende an der Einmündung des Kanals (20) im Ofen befindet, um dort Gasproben zu entnehmen und sie zur Gasproben-Aufnahmevorrichtung außerhalb des Ofens zu leiten, und
durch Querstege (28), um die einzelnen Abschnitte des Hüllrohres (18) miteinander zu verbinden und um die Kanäle (20, 22) der ersten Serie und der zweiten Serie abzustützen, wobei diese Stege (28) zwischen zwei aufeinanderfolgenden Abschnitten des Hüllrohres (16) angeordnet und derart dimensioniert sind, daß sie gleichzeitig die Stufen (18) mit den Einmündungen der besagten Kanäle (20, 22) bilden.

2. Sonde gemäß Patentanspruch 1, dadurch gekennzeichnet, daß die Stufen (18) abwechselnd auf der einen bzw. der anderen Seite einer vertikalen, durch die Längsachse der Sonde verlaufenden Ebene angeordnet sind.

3. Sonde gemäß Patentanspruch 1, dadurch gekennzeichnet, daß die Stege (28) vorstehende dreieckige Bereiche haben, wobei die Spitze eines jeden dreieckigen Bereiches zur Beschickungsoberfläche gerichtet ist und daß die einzelnen aufeinanderfolgenden dreieckigen Bereiche, gesehen in einer axialen Projektion der Sonde, versetzt zueinander angeordnet sind.

4. Sonde gemäß Patentanspruch 1, dadurch gekennzeichnet, daß das hintere Ende eines Gasproben-Entnahmerohres (32) und/oder eines Temperaturmeßrohres (42) außerhalb des Ofens an das Hüllrohr (16) angeflanscht ist und daß das innere Ende dieser Rohre (32, 42) frei aus dem durch das Hüllrohr führenden Kanal herausragt.

5. Sonde gemäß Patentanspruch 1, dadurch gekennzeichnet, daß das hintere Ende eines Gasproben-Entnahmerohres (32a) und/oder eines Temperaturmeßrohres (42) mittels einer außen am Ofen angebrachten zylindrischen Schraubenfeder (38) in seinem Aufnahmekanal (20), (22) in Position gehalten wird.

6. Sonde gemäß einem der Patentansprüche 1 bis 4, dadurch gekennzeichnet, daß das Hüllrohr (16) einen abgedichteten Behälter darstellt, in dem die Kanäle (20) und (22) abgedichtet untergebracht sind und der außerhalb des Ofens an einen Kühlkreislauf angeschlossen ist.

7. Sonde gemäß Patentanspruch 5, gekennzeichnet durch einen in Achsrichtung verlaufenden Kanal (24) oder mehrere, von den Stegen (28) im Innern des Hüllrohres (16), abgestützten Kühlmittelkanäle.

8. Sonde gemäß einem der Patentansprüche 1 bis 4, dadurch gekennzeichnet, daß die geradlinigen durch das Hüllrohr (16) führenden Kanäle (20, 22) aus diesem außen am Ofen über eine Dichtung austreten.
